(19) Europäisches Patentamt
European Patent Office
Office européen des brevets

(11) EP 1 932 893 B1

(12) # EUROPEAN PATENT SPECIFICATION

(45) Date of publication and mention of the grant of the patent:
**30.11.2011 Bulletin 2011/48**

(51) Int Cl.:
***C09J 183/04*** *(2006.01)*

(21) Application number: **07254869.6**

(22) Date of filing: **14.12.2007**

(54) **Addition curable silicone adhesive composition and cured product thereof**

Zusatzhärtbare Silikon-Klebstoff-Zusammensetzung und gehärtetes Produkt daraus

Composition d'addition adhésive en silicone durcissable et produit durci correspondant

(84) Designated Contracting States:
**DE**

(30) Priority: **15.12.2006 JP 2006338186**

(43) Date of publication of application:
**18.06.2008 Bulletin 2008/25**

(73) Proprietor: **Shin-Etsu Chemical Co., Ltd.**
**Tokyo (JP)**

(72) Inventors:
- **Aketa, Takashi**
**Silicone Denshi Zairyo, Gijutsu Kenkyusho**
**Shin-Etsu Chemical Co., Ltd.,**
**Annaka-shi, Gunma-ken (JP)**
- **Hara, Hiroyasu**
**Silicone Denshi Zairyo, Gijutsu Kenkyusho**
**Shin-Etsu Chemical Co., Ltd.,**
**Annaka-shi, Gunma-ken (JP)**

(74) Representative: **Hallybone, Huw George et al**
**Carpmaels & Ransford**
**One Southampton Row**
**London**
**WC1B 5HA (GB)**

(56) References cited:
**EP-A- 1 081 185**
**EP-A- 1 136 532**
**EP-A- 1 172 413**
**JP-A- 6 306 290**
**JP-A- 2005 327 777**
**US-A- 5 827 921**
**US-A1- 2006 047 133**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 932 893 B1

## Description

### BACKGROUND OF THE INVENTION

### 1. Field of the Invention

The present invention relates to an addition curable silicone adhesive composition that exhibits favorable adhesion to an adherend, either at room temperature or under heating, and yields a transparent cured product, and also relates to a cured product of the composition.

### 2. Description of the Prior Art

Addition curable silicone adhesive compositions are used in applications relating to electrical and electronic components, and in vehicle-related applications.

In order to achieve favorable adhesiveness for these addition curable silicone compositions, compounds containing epoxy groups or alkoxy groups have conventionally been added to the compositions as adhesion-imparting agents. Favorable adhesiveness can be achieved for these compositions by heating to a temperature of 100°C or higher. However, when the above types of compounds are added to improve the adhesion, the resulting cured product tends to become cloudy or develop a yellow discoloration. The reason for this discoloration is that the above adhesion-imparting agents tend to be substantially insoluble in the silicone matrix under conditions of high temperature or heat history. Accordingly, in order to prevent the above clouding or yellowing of the cured product, and ensure a transparent cured product that is free from discoloration, the quantity added of the above type of adhesion-imparting agent must be restricted to a level that does not cause these types of discoloration problems. However, reducing the quantity of the adhesion-imparting agent tends to make the adhesiveness of the resulting composition extremely unstable, or even fail to develop adhesiveness, meaning the composition becomes unsuitable as an adhesive.

Document EP 1 172413 A2 discloses a "silicone rubber adhesive composition comprising (A) a heat curable organopolysiloxane composition of the addition curing type or peroxide curing type, (B) reinforcing silica fines, (C) an adhesive agent, and (D) an organosilicon compound having a functional group reactive with component (A) and a siloxane skeleton incompatible with component (A)".

Document EP 1 136532 A2 discloses a "primer composition comprising (A) a diorganopolysiloxane having an average degree of polymerization of 500-2,000 and alkenyl groups at both ends of its molecular chain in an amount of 0.001-0.005 mol per 100g of the diorganosiloxane, (B) an organohydrogenpolysiloxance having at least two SiH groups in a molecule, (C) a platinum base curing catalyst, and (D) a retarder".

Document US 2006/0047133 A1 discloses an "organopolysiloxane, an organosilicon compound having at least three hydrolysable radicals in the molecule, an acid anhydride and optionally a filler cures at room temperature".

Furthermore, recent demands for improved energy conservation mean that addition curable silicone adhesive compositions that are able to be cured at low temperatures, and if possible at room temperature, are now being keenly sought.

### SUMMARY OF THE INVENTION

An object of the present invention is to provide an addition curable silicone adhesive composition that can be cured at room temperature, exhibits favorable adhesiveness, and yields a cured product upon curing that suffers no cloudiness or yellowing, has a colorless and transparent external appearance, exhibits a transmittance for visible light of at least 70%, and has a type A hardness measured in accordance with JIS K6253 of 25 or greater, and also to provide a transparent cured product produced using this composition.

As a result of intensive research, the inventors of the present invention discovered that the above object could be achieved by using a room temperature addition curable silicone adhesive composition comprising (A) a diorganopolysiloxane containing at least two alkenyl groups bonded to silicon atoms within each molecule wherein organic groups bonded to the silicon atoms in the diorganopolysiloxane other than the alkenyl groups are unsubstituted or halogen-substituted monovalent hydrocarbon groups, (B) a three dimensional organopolysiloxane resin that comprises at least one branch-forming unit selected from trifunctional siloxane units represented by formula $RSiO_{3/2}$ (wherein, R represents a substituted or unsubstituted monovalent hydrocarbon group) and tetrafunctional siloxane units represented by $SiO_{4/2}$, (C) an organohydrogenpolysiloxane containing at least two hydrogen atoms bonded to silicon atoms within each molecule, represented by an average composition formula (1): $H_aR^3_bSiO_{(4-a-b)/2}$ (1) wherein each $R^3$ group represents, independently, an unsubstituted monovalent hydrocarbon group that contains no aliphatic unsaturated bonds or a trifluoropropyl group, and a and b are numbers that satisfy the formulas: $0 < a < 2$, $0.8 \leq b \leq 2$ and $0.8 < a+b \leq 3$ in sufficient quantity to provide from 0.1 to 5.0 mols of hydrogen atoms bonded to silicon atoms within component (C) per 1 mol of a total

quantity of silicon atom-bonded alkenyl groups within component (A) and component (B), (D) a catalytic quantity of a hydrosilylation reaction catalyst, (E) an organosilicon compound as an adhesion-imparting agent selected from an organosilane or organopolysiloxane that contains at least two functional groups selected from the group consisting of alkoxy groups, a silanol group, an epoxy group, alkenyl groups, an acryloyl group, a methacryloyl group and a hydrosilyl group, and (F) an acid anhydride that is liquid at room temperature.

The invention further provides an at least partially transparent product, comprising: a glass portion and an adhesive portion; wherein the adhesive portion comprises the room temperature addition curable silicone adhesive composition of the invention, which is in direct contact with the glass portion and is in cured form.

The invention further provides a process for producing a transparent cured product of a silicone composition, comprising curing the composition of the invention at room temperature.

The invention further provides a process for producing a transparent product comprising a glass portion and an adhesive portion which is in direct contact with the glass portion, comprising: applying the composition of the invention to a substrate of glass, and curing the thus obtained composition to form the adhesive portion comprising a cured product of the composition.

A silicone adhesive composition of the present invention can be cured at a low temperature, and may even be cured at room temperature without any heating.

Moreover, even at such low curing temperatures, the composition exhibits favorable adhesion to all manner of adherends including glass. In addition, the resulting cured product has a high degree of transparency and suffers no yellowing or the like. As a result, the composition is useful as a coating material or the like for glass surfaces that are prone to scratching.

## DETAILED DESCRIPTION OF THE PREFERRED EMBODIMENTS

A more detailed description of the present invention is provided below. Unless stated otherwise, room temperature refers to a temperature of 25°C. Furthermore, Me represents a methyl group and Vi represents a vinyl group.

### - (A) Alkenyl Group-containing Diorganopolysiloxane -

The organopolysiloxane of the component (A) functions as the principal component (the base polymer) of the composition of the present invention, and is a diorganopolysiloxane containing at least two alkenyl groups bonded to silicon atoms within each molecule. Typical examples of the alkenyl groups include lower alkyl groups of 2 to 8 carbon atoms such as a vinyl group, allyl group, propenyl group, butenyl group, pentenyl group, hexenyl group or heptenyl group, and of these, lower alkenyl groups of 2 to 4 carbon atoms are preferred. Vinyl groups are particularly desirable. Suitable bonding positions for the alkenyl groups within the component (A) include the silicon atoms at the molecular chain terminals and/or silicon atoms at non-terminal positions within the molecular chain. Besides the alkenyl groups, other organic groups bonded to the silicon atoms within the component (A) are unsubstituted or halogen-substituted monovalent hydrocarbon groups including alkyl groups such as a methyl group, ethyl group, propyl group, butyl group, pentyl group, hexyl group or heptyl group; aryl groups such as a phenyl group, tolyl group, xylyl group or naphthyl group; aralkyl groups such as a benzyl group or phenethyl group; and halogenated alkyl groups such as a chloromethyl group, 3-chloropropyl group or 3,3,3-trifluoropropyl group. These organic groups typically contain from 1 to 12 carbon atoms, and preferably from 1 to 8 carbon atoms. Methyl groups and phenyl groups are particularly desirable.

The molecular structure of this type of component (A) is typically a straight-chain diorganopolysiloxane structure in which the principal chain comprises repeating diorganosiloxane units, and the molecular chain terminals are blocked with triorganosiloxy groups, although straight-chain structures containing partial branching, cyclic structures, and branched-chain structures are also possible.

The viscosity of the component (A) at 25°C is preferably within a range from 100 to 500,000 mPa·s, and is even more preferably from 300 to 100,000 mPa·s, as such values yield more favorable physical properties for the resulting silicone rubber, and more favorable handling properties for the composition. Specific examples of the organopolysiloxane of the component (A) include copolymers of dimethylsiloxane and methylvinylsiloxane with both molecular chain terminals blocked with trimethylsiloxy groups, methylvinylpolysiloxane with both molecular chain terminals blocked with trimethylsiloxy groups, copolymers of dimethylsiloxane, methylvinylsiloxane, and methylphenylsiloxane with both molecular chain terminals blocked with trimethylsiloxy groups, copolymers of dimethylsiloxane, methylvinylsiloxane, and diphenylsiloxane with both molecular chain terminals blocked with trimethylsiloxy groups, copolymers of dimethylsiloxane, methylvinylsiloxane, and diphenylsiloxane with both molecular chain terminals blocked with dimethylvinylsiloxy groups, dimethylpolysiloxane with both molecular chain terminals blocked with dimethylvinylsiloxy groups, methylvinylpolysiloxane with both molecular chain terminals blocked with dimethylvinylsiloxy groups, copolymers of dimethylsiloxane and methylvinylsiloxane with both molecular chain terminals blocked with dimethylvinylsiloxy groups, copolymers of dimethylsiloxane, methylvinylsiloxane, and methylphenylsiloxane with both molecular chain terminals blocked with dimethylvinylsiloxy

groups, dimethylpolysiloxane with both molecular chain terminals blocked with divinylmethylsiloxy groups, dimethylpolysiloxane with both molecular chain terminals blocked with trivinylsiloxy groups, as well as mixtures of two or more of theses organopolysiloxanes.

- (B) Three Dimensional Organopolysiloxane Resin -

The organopolysiloxane resin of the component (B) comprises at least one branch-forming unit selected from trifunctional siloxane units represented by formula $RSiO_{3/2}$ (wherein, R represents a substituted or unsubstituted monovalent hydrocarbon group) (that is, organosilsesquioxane units) and tetrafunctional siloxane units represented by $SiO_{4/2}$, and has a three dimensional structure (typically a three dimentional network structure). The "branch-forming unit" herein refers to a siloxane unit that has a function to branch the molecular chain of the organopolysiloxane, and includes trifunctional siloxane units ($RSiO_{2/3}$) and tetrafunctional siloxane units ($SiO_{4/2}$). The component (B) comprises as the branch-forming unit either one of or both of the trifunctional siloxane units and tetrafunctional siloxane units. This organopolysiloxane resin may also comprise one or more alkenyl groups bonded to silicon atoms within the molecule. Including the component (B) enables the strength of the resulting silicone rubber to be increased. This three dimensional organopolysiloxane resin may also include monofunctional siloxane units (that is, triorganosiloxy units) and/or difunctional siloxane units (that is, diorganosiloxane units).

In the formula $RSiO_{2/3}$, the substituted or unsubstituted monovalent hydrocarbon group represented by R is usually those containing 1 to 10 carbon atoms, and examples thereof include alkyl groups such as a methyl group, ethyl group, propyl group, isopropyl group, butyl group, isobutyl group, tert-butyl group, pentyl group, neopentyl group, hexyl group, heptyl group, octyl group, nonyl group or decyl group; cycloalkyl groups such as cyclopentyl group, cyclohexyl group or cycloheptyl group; alkenyl groups such as vinyl group, ally group, propenyl group, isopropenyl group, butenyl group, pentenyl group, hexenyl group, or cycloalkenyl groups such as cyclohexenyl group (the term "alkenyl groups" herein are used to include cycloalkenyl groups); aryl groups such as a phenyl group, tolyl group, xylyl group, naphthyl group or biphenyl group; aralkyl groups such as a benzyl group, phenylethyl group or phenylpropyl group; alkaryl groups such as methylbenzyl group; and these hydrocarbon groups in which one or more hydrogen atoms are substituted with halogen atoms such as fluorine atom, chlorine atom or bromine atom, or cyano group, such as halogenated alkyl groups, for example, a chloromethyl group, 2-bromomethyl group, 3-chloropropyl group or 3,3,3-trifluoropropyl group.

The organopolysiloxane resin of the component (B) having the three dimensional structure preferably has an average composition formula:

$$(R')_aSiO_{(4-a)/2}$$

wherein, R' represents a substituted or unsubstituted monovalent hydrocarbon group usually having 1 to 10 carbon atoms and preferably having 1 to 6 carbon atoms, and examples thereof include those illustrated in the above for R in the formula $RSiO_{3/2}$, and a is a positive number usually 0.8 to 1.9, preferably 0.9 to 1.8, more preferably 1.0 to 1.5.

Examples of this type of organopolysiloxane resin of the component (B) include copolymers composed of $R^1_3SiO_{0.5}$ units and $SiO_2$ units, copolymers composed of $R^1_3SiO_{0.5}$ units, $R^1_2SiO$ units and $SiO_2$ units, copolymers composed of $R^1_3SiO_{0.5}$ units, $R^1R^2SiO$ units and $SiO_2$ units, copolymers composed of $R^1_3SiO_{0.5}$ units, $R^1_2SiO$ units, $R^1R^2SiO$ units and $SiO_2$ units, copolymers composed of $R^1_3SiO_{0.5}$ units, $R^1_2R^2SiO_{0.5}$ units, $R^1_2SiO$ units and $SiO_2$ units, copolymers composed of $R^1_3SiO_{0.5}$ units, $R^1_2R^2SiO_{0.5}$ units and $SiO_2$ units, copolymers composed of $R^1_2R^2SiO_{0.5}$ units, $R^1_2SiO$ units and $SiO_2$ units, and copolymers composed of $R^1R^2SiO$ units, $R^1SiO_{1.5}$ units and/or $R^2SiO_{1.5}$ units. (In these formulas, $R^1$ represents a substituted or unsubstituted monovalent hydrocarbon group that contains no unsaturated aliphatic bonds, and suitable examples include the substituted or unsubstituted monovalent hydrocarbon group illustrated above for R except for alkenyl groups, and particularly include alkyl groups such as a methyl group, ethyl group, propyl group, butyl group, pentyl group, hexyl group or heptyl group; aryl groups such as a phenyl group, tolyl group, xylyl group or naphthyl group; aralkyl groups such as a benzyl group or phenethyl group; and halogenated alkyl groups such as a chloromethyl group, 3-chloropropyl group or 3,3,3-trifluoropropyl group. Furthermore, $R^2$ represents an alkenyl group, and suitable examples include a vinyl group, allyl group, butenyl group, pentenyl group, hexenyl group or heptenyl group).

More specific examples of the component (B) include resins composed of $(CH_3)_3SiO_{1/2}$ units and $SiO_{4/2}$ units, resins composed of $(CH_3)_3SiO_{1/2}$ units, $(CH_2=CH)SiO_{3/2}$ units and $SiO_{4/2}$ units, resins composed of $(CH_2=CH)(CH_3)_2SiO_{1/2}$ units and $SiO_{4/2}$ units, resins composed of $(CH_2=CH)(CH_3)_2SiO_{1/2}$ units, $(CH_2=CH)SiO_{3/2}$ units and $SiO_{4/2}$ units, resins composed of $(CH_3)_3SiO_{1/2}$ units, $(CH_2=CH)(CH_3)_2SiO_{1/2}$ units and $SiO_{4/2}$ units, and resins in which a portion of the methyl groups within one of the above resins have been substituted with phenyl groups. In the case of resins containing alkenyl groups such as vinyl groups, the alkenyl groups participate in the formation of cross-linked structures during the curing of the composition of the present invention, causing an increase in the strength of the cured product.

There are no particular restrictions on the blend quantity of the component (B), although a typical quantity

represents from 1 to 70% by mass, and preferably 5 to 60% by mass, of the combined mass of the component (A) and the component (B).

- (C) Organohydrogenpolysiloxane -

The organohydrogenpolysiloxane of the component (C) used in the composition of the present invention contains at least two (typically from 2 to 300), and preferably three or more (for example, from 3 to approximately 150) hydrogen atoms bonded to silicon atoms (namely, SiH groups) within each molecule, and may be a resin-like material with a straight-chain, branched-chain, cyclic, or three dimensional network structure. In this organohydrogenpolysiloxane, the number of silicon atoms within each molecule (namely, the polymerization degree) is typically within a range approximately from 2 to 300, and is preferably approximately from 3 to 200. The organohydrogenpolysiloxane is represented by an average composition formula (1) shown below.

$$H_aR^3_bSiO_{(4-a-b)/2} \qquad (1)$$

(wherein, each $R^3$ group represents, independently, an unsubstituted monovalent hydrocarbon group that contains no aliphatic unsaturated bonds or a trifluoropropyl group, and a and b are numbers that satisfy the formulas: $0 < a < 2$, $0.8 \leq b \leq 2$ and $0.8 < a+b \leq 3$, and preferably satisfy the formulas: $0.05 \leq a \leq 1$, $1.5 \leq b \leq 2$ and $1.8 \leq a+b \leq 2.7$)

In the average composition formula (1), examples of the unsubstituted monovalent hydrocarbon group containing no aliphatic unsaturated bonds represented by $R^3$ include the same groups as those exemplified above in relation to $R^1$. Of these groups, particularly representative groups include those containing from 1 to 10, and preferably from 1 to 7, carbon atoms. A lower alkyl group of 1 to 3 carbon atoms such as a methyl group, a phenyl group, or a 3,3,3-trifluoropropyl group is particularly desirable.

Specific examples of the organohydrogenpolysiloxane include siloxane oligomers such as 1,1,3,3-tetramethyldisiloxane, 1,3,5,7-tetramethylcyclotetraailoxane, 1,3,5,7,8-pentamethylcyclopentasiloxane, tris(dimethylhydrogensiloxy)methylsilane, and tris(dimethylhydrogensiloxy)phenylsilane; methylhydrogencyclopolysiloxane, cyclic copolymers of methylhydrogensiloxane and dimethylsiloxane, methylhydrogenpolysiloxane with both molecular chain terminals blocked with trimethylsiloxy groups, copolymers of dimethylsiloxane and methylhydrogensiloxane with both terminals blocked with trimethylsiloxy groups, dimethylpolysiloxane with both terminals blocked with dimethylhydrogensiloxy groups, methylhydrogenpolysiloxane with both terminals blocked with dimethylhydrogensiloxy groups, and copolymers of dimethylsiloxane and methylhydrogensiloxane with both terminals blocked with dimethylhydrogensiloxy groups; as well as silicone resins composed of $R^3_2(H)SiO_{1/2}$ units and $SiO_{4/2}$ units, which may also include $R^3_3SiO_{1/2}$ units, $R^3_2SiO_{2/2}$ units, $R^3(H)SiO_{2/2}$ units, $(H)SiO_{3/2}$ units and/or $R^3SiO_{3/2}$ units (wherein, $R^3$ is as defined above), and compounds in which a portion of the methyl groups within the above compounds have been substituted with other alkyl groups such as ethyl groups or propyl groups, and/or phenyl groups.

The organohydrogenpolysiloxane used in the composition of the present invention can be prepared by known methods. For example, one or more chlorosilanes selected from amongst compounds with the formulas $R^3SiHCl_2$ and $R^3_2SiHCl$ (wherein, $R^3$ is as defined above) may be subjected to cohydrolysis, or one or more of these chlorosilanes may be subjected to cohydrolysis with one or more chlorosilanes selected from amongst compounds with the formulas $R^3_3SiCl$ and $R^3_2SiCl_2$ (wherein, $R^3$ is as defined above). Furthermore, the organohydrogenpolysiloxane may also be the product obtained by subjecting a polysiloxane obtained using the above type of cohydrolysis to an additional equilibration reaction.

The quantity of the component (C) is set so that for each silicon atom-bonded alkenyl group within the combination of the organopolysiloxanes of the component (A) and component (B), the quantity of hydrogen atoms bonded to silicon atoms (namely, SiH groups) within the organohydrogenpolysiloxane of the component (C) is within a range from 0.1 to 5.0, and preferably from 0.1 to 2.0.

- (D) Hydrosilylation Reaction Catalyst -

A platinum group metal-based catalyst used in the present invention has a function of accelerating the addition reaction between the alkenyl groups within the component (A) (or within the combination of the component (A) and the component (B) in those cases where the component (B) also includes alkenyl groups) and the hydrogen atoms bonded to silicon atoms within the component (C). This catalyst can use any of the conventional catalysts used for hydrosilylation reactions. Specific examples of the catalyst include simple platinum group metals such as platinum, rhodium and palladium; platinum chlorides such as $H_2PtCl_4 \cdot nH_2O$, $H_2PtCl_6 \cdot nH_2O$, $NaHPtCl_6 \cdot nH_2O$, $KHPtCl_6 \cdot nH_2O$, $Na_2PtCl_6 \cdot nH_2O$, $K_2PtCl_4 \cdot nH_2O$, $PtCl_4 \cdot nH_2O$, $PtCl_2$ and $Na_2HPtCl_4 \cdot nH_2O$ (wherein, n represents an integer from 0 to 6, and is preferably either 0 or 6); chloroplatinic acid and chloroplatinates; alcohol-modified chloroplatinic acid (see U.S. Pat. No. 3,220,972); complexes of chloroplatinic acid and olefins (see U.S. Pat. No. 3,159,601, No. 3,159,662 and No. 3,775,452); a platinum

group metal such as platinum black or palladium supported on a carrier such as alumina, silica or carbon; rhodium-olefin complexes; chlorotris(triphenylphosphine)rhodium (Wilkinson's catalyst); and complexes of platinum chloride, chloroplatinic acid or a chloroplatinate with a vinyl group-containing siloxane, and particularly with a vinyl group-containing cyclic siloxane.

The quantity used of the component (D) need only be sufficient to ensure effective catalytic activity, and a typical quantity, calculated as the mass of the platinum group metal relative to the total mass of the components (A) through (C), is within a range approximately from 0.1 to 500 ppm, with quantities approximately from 0.5 to 200 ppm being particularly desirable.

- (E) Organosilicon Compound that functions as an Adhesion-imparting agent -

The adhesion-imparting agent added to the composition of the present invention is an organosilicon compound containing at least two functional groups selected from the group consisting of alkoxy groups, a silanol group, an epoxy group, alkenyl groups, an acryloyl group, a methacryloyl group and a hydrosilyl group (SiH group) within each molecule. More specific examples include organosilanes and cyclic or straight-chain organopolysiloxanes of approximately 2 to 30 carbon atoms that contain at least two of the above functional groups. Alkoxy group-containing silanes and hydrosilyl group-containing organopolysiloxanes are particularly preferred. Examples of specific organosilicon compounds include the structures shown below.

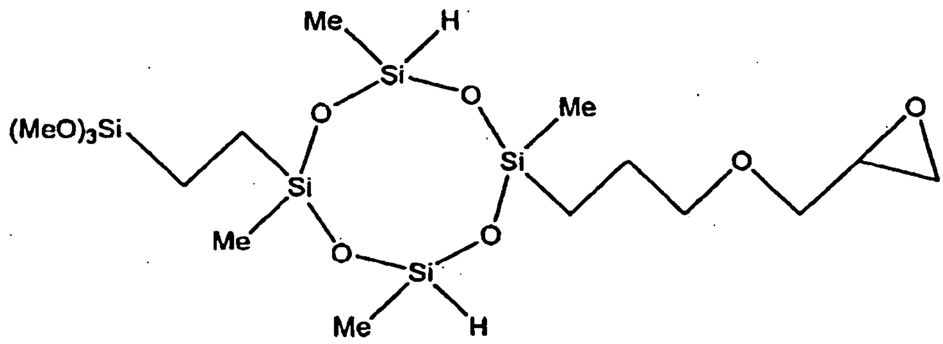

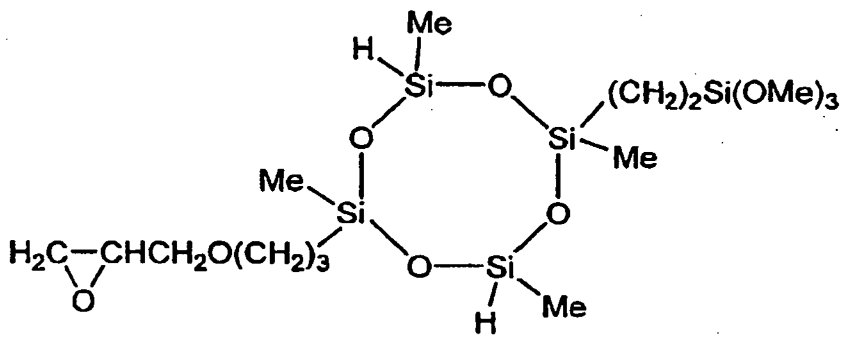

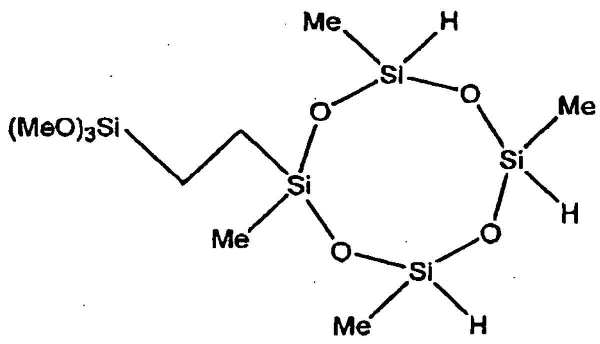

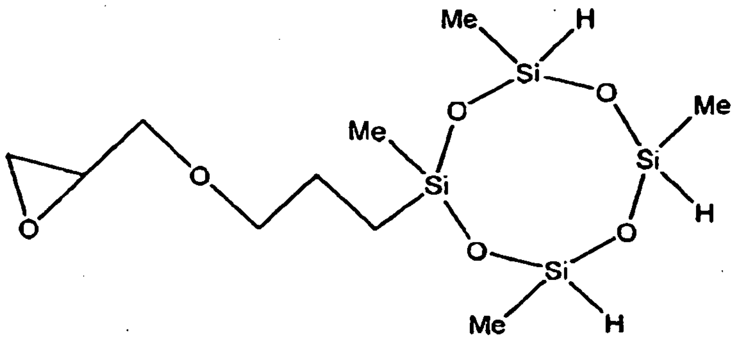

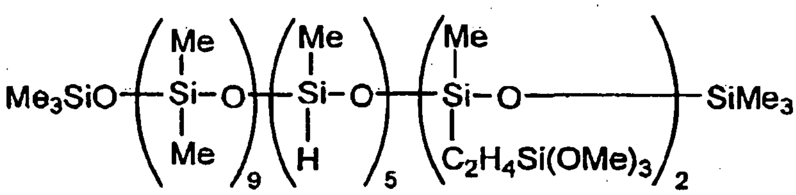

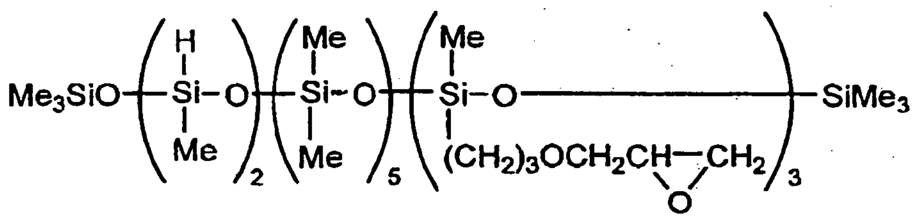

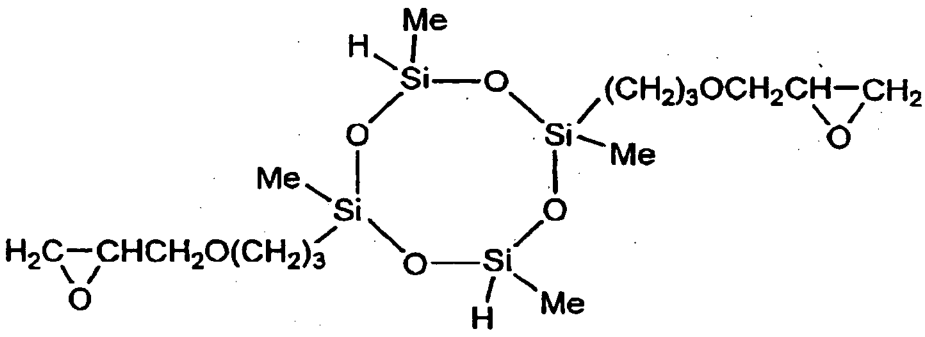

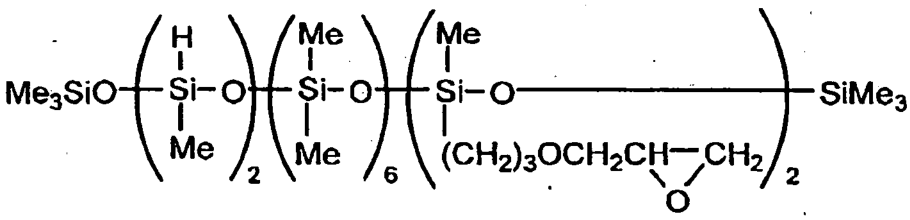

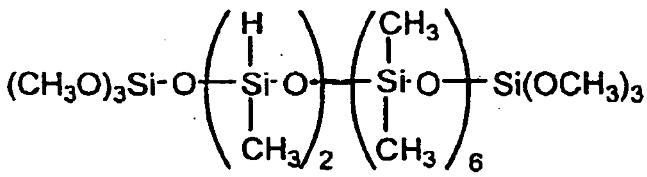

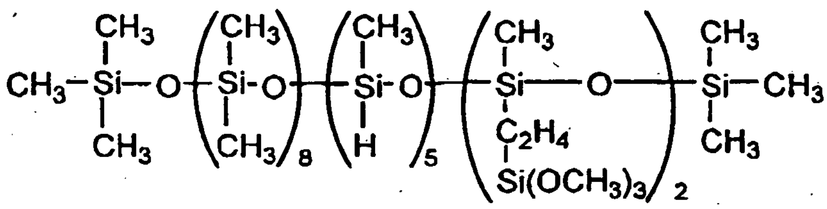

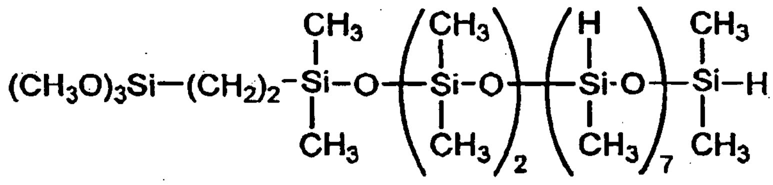

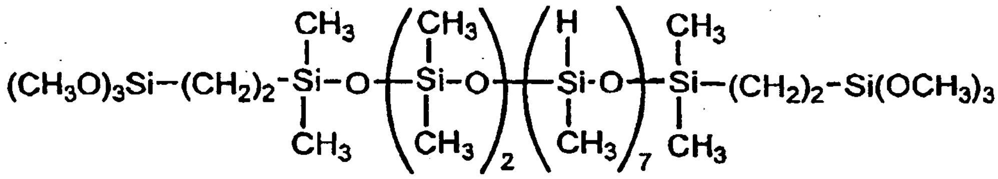

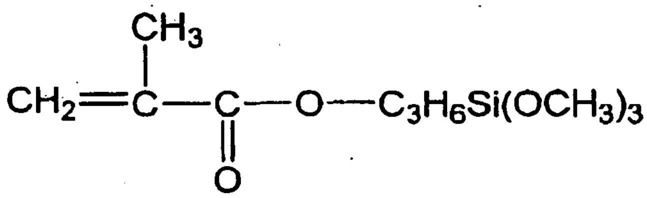

The organosilicon compound of the component (E) described above may use either a single compound or a combination of two or more different compounds.

The quantity of the component (E) varies depending on the nature of the organosilicon compound, but there are no particular restrictions on the quantity added provided the compound has no adverse effects on the transparency of the resulting cured product and yields a favorable improvement in the adhesiveness. A typical quantity of the component (E) is within a range from 0.1 to 10 parts by mass, and preferably from 0.5 to 5 parts by mass, per 100 parts by mass of the combination of the components (A) and (B).

- (F) Acid Anhydride that is Liquid at Room Temperature -

Using the component (F) in combination with the component (E) yields better adhesion under low-temperature curing conditions, and improves the transparency of the resulting cured product. If the component (E) is not added, or the quantity added is too small, then these improvements in the adhesion and the transparency are unattainable. In other words, if the component (F) is absent, or is present in only a very small quantity, then the quantity of the component (E) that must be added to achieve the desired level of adhesiveness makes it very difficult to avoid yellowing and a deterioration in the transparency of the cured product. On the other hand, if the quantity of the component (E) is reduced sufficiently to ensure favorable transparency of the cured product, then an unsatisfactory level of adhesiveness is unavoidable.

The acid anhydride must be a liquid at room temperature (25°C), and is preferably a compound that also contains an aliphatic unsaturated group (an addition functional group) such as an alkenyl group within the molecular structure. If the acid anhydride is a solid at room temperature, then addition of the acid anhydride to the composition, even in the form of a powder, causes a significant deterioration in the transparency of the composition, and therefore in the transparency of the cured product obtained upon curing the composition at a low temperature such as room temperature. Furthermore, if the acid anhydride does not contain an addition functional group such as an alkenyl group, then the targeted level of hardness may be unattainable.

There are no other particular restrictions on the acid anhydride provided it satisfies the above conditions, and

suitable examples include allylsuccinic anhydride, acrylic anhydride and methacrylic anhydride.

The quantity of the component (F) is typically within a range from 0.1 to 5 parts by mass, and preferably from 0.2 to 2 parts by mass, per 100 parts by mass of the combination of the components (A) and (B).

- Other Components -

If required, other additives typically used within addition curable silicone compositions, such as hydrosilylation addition reaction retarders may also be added to the composition of the present invention in addition to the components (A) through (F) described above, provided the addition of these additives does not impair the objects or effects of the present invention.

EXAMPLES

The present invention is described below in further detail based on a series of examples and comparative examples.

[Raw Materials]

The raw materials listed below were used in the examples and comparative examples.

- Component (A) (Alkenyl group-containing diorganopolysiloxane)

(A-1): a vinyl group-containing straight-chain organopolysiloxane represented by a formula: $Vi(Me)_2Si\text{-}(OSiMe_2)_n\text{-}OSi(Me)_2Vi$
(wherein, n is an average value, and represents a number that yields a viscosity at 25°C for the siloxane of 100,000 mPa·s).

- Component (B) (Three dimensional organopolysiloxane resin)

(B-1): a vinyl group-containing methylpolysiloxane resin with a three dimensional network structure composed of $Vi(Me)_2SiO_{1/2}$ units and $SiO_{4/2}$ units.

- Component (C)

(C-1): an organohydrogenpolysiloxane represented by a formula:

$$(Me)_3Si\text{-}(OSiMe_2)_{18}\text{-}(OSiMeH)_{20}\text{-}OSi(Me)_3$$

The quantity added of the component (C-1) was set so as to provide 2.0 silicon atom-bonded hydrogen atoms within (C-1) for each alkenyl group within the combination of (A-1) and (B-1).

- Component (D)

(D-1): a toluene solution of a platinum-divinyltetramethyldisiloxane complex with an equivalent platinum element content of 0.5% by mass.

- Component (E)

(E-1):

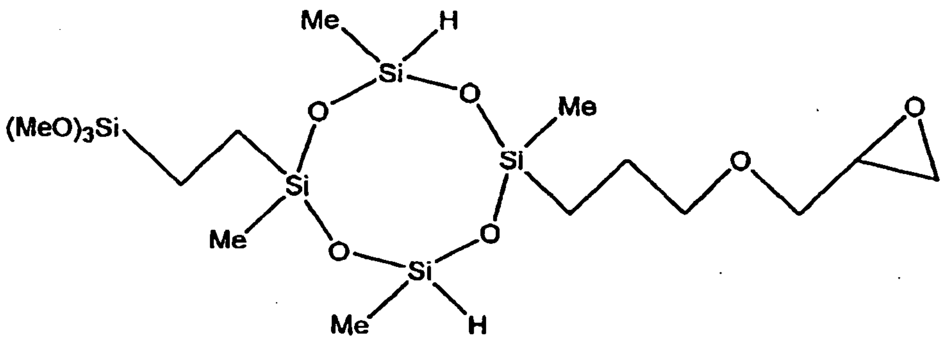

(E-2):

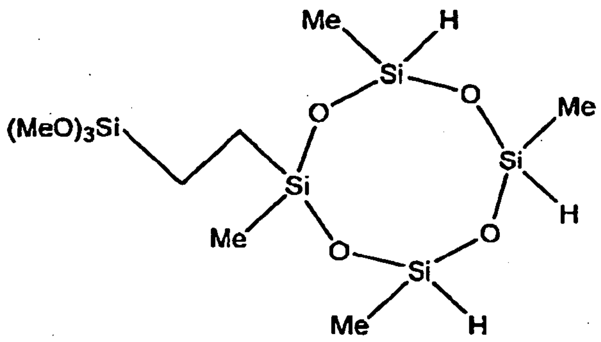

(E-3):

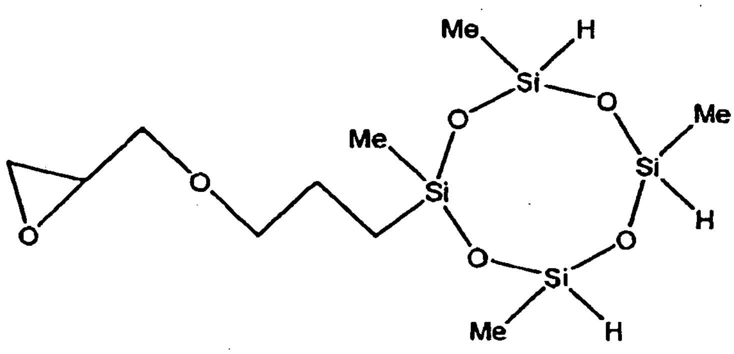

(E-4):

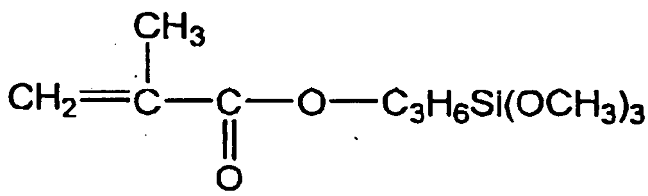

- Component (F)

(F-1): allylsuccinic anhydride (manufactured by Wako Pure Chemical Industries, Ltd.) (liquid at room temperature)
(F-2): acrylic anhydride (liquid at room temperature)
(F-3): methacrylic anhydride (liquid at room temperature)
(F-4): butyric anhydride (solid at room temperature)
(F-5): citraconic anhydride (solid at room temperature)
(F-6): titanium tetra-normal-butoxide (solid at room temperature)

- Component (G)

(G-1): 1,3,5,7-tetramethyl-1,3,5,7-tetravinylcyclotetrasiloxane (an addition reaction retarder)

[Experimental Method]

In each example, according to the formulation shown in Table 1 (the quantities of each component in Table 1 represent parts by mass), components required therefor were blended together in the manner described below. Namely, first, the component (A), the component (B) and the component (D) were mixed together thoroughly, and the component (G) was then added and mixed into the resulting mixture. The component (C), the component (E) and the component (F) were then added to the mixture and mixed thoroughly. Subsequently, defoaming was conducted under reduced pressure. The composition prepared in this manner was then cured by standing for 24 hours at 25°C. The hardness and transparency of the resulting cured product, and the presence or absence of discoloration (coloration) were measured using the methods described below.

[Measurement methods]

- Evaluation of Hardness

The type A hardness was measured in accordance with JIS K6253. The type A hardness refers to the hardness measured using a type A durometer prescribed in JIS K6253.

- Evaluation of Adhesion

The composition was poured onto a sheet of float glass, and cured by standing for 24 hours at 25°C. Following curing, a razor blade was inserted between the cured film and the float glass at a point at the edge of the cured film, and the edge of the cured film was peeled up. This peeled edge of the film was then grasped between the thumb and forefinger and pulled with a substantially even force in a direction approximately perpendicular to the surface of the float glass. The adhesion of the film was evaluated based on the following criteria.
Good: the film did not peel
Poor: the film peeled away from the glass

- Evaluation of Transparency

Using a spectrophotometer (product name: U3310 Spectrophotometer, manufactured by Hitachi, Ltd.), the

transmittance of the cured product was measured for the wavelength band from 400 to 800 nm, and then evaluated based on the following criteria.

Good: the transmittance was 70% or greater for the entire wavelength band. Recorded in Table 1 using the symbol O.
Poor: the transmittance was less than 70% for at least a portion of the wavelength band. Recorded in Table 1 using the symbol x.

- Evaluation of External Appearance Abnormalities

The external appearance of the cured product was inspected visually under the naked eye, and the existence of discernible abnormalities such as discoloration (coloration) or cloudiness was evaluated based on the following criteria. The results are shown in Table 1.

None: the cured product was colorless and transparent, with no detectable abnormalities in the external appearance.

If yellowing or cloudiness was detected, then the nature of the abnormality was recorded.

[Table 1]

| | Example 1 | Example 2 | Example 3 | Example 4 | Example 5 | Comparative example 1 | Comparative example 2 | Comparative example 3 | Comparative example 4 |
|---|---|---|---|---|---|---|---|---|---|
| (A-1) | 50 | 50 | 50 | 50 | 50 | 50 | 50 | 50 | 50 |
| (B-1) | 50 | 50 | 50 | 50 | 50 | 50 | 50 | 50 | 50 |
| (C-1) | 6.6 | 6.6 | 6.6 | 6.6 | 6.6 | 6.6 | 6.6 | 6.6 | 6.6 |
| (D-1) | 0.25 | 0.25 | 0.25 | 0.25 | 0.25 | 0.25 | 0.25 | 0.25 | 0.25 |
| (E-1) | 2 | | | 2 | 2 | 2 | 2 | 2 | 2 |
| (E-2) | | 2 | | | | | | | |
| (E-3) | | | 2 | | | | | | |
| (E-4) | 0.5 | 0.5 | 0.5 | 0.5 | | 0.5 | 0.5 | 0.5 | 0.5 |
| (F-1) | 0.5 | | | 0.3 | 0.5 | | | | |
| (F-2) | | 0.5 | | | | | | | |
| (F-3) | | | 0.5 | | | | | | |
| (F-4) | | | | | | | 0.5 | | |
| (F-5) | | | | | | | | 0.5 | |
| (F-6) | | | | | | | | | 0.5 |
| (G-1) | 0.1 | 0.1 | 0.1 | 0.1 | 0.1 | 0.1 | 0.1 | 0.1 | 0.1 |
| Type A hardness | 40 | 35 | 36 | 42 | 39 | 10 | 10 | 39 | 36 |
| Adhesion | Good | Good | Good | Good | Good | Poor | Good | Good | Good |
| Transparency | Good | Good | Good | Good | Good | Good | Good | Poor | Poor |
| External appearance abnormalities | None | None | None | None | None | None | None | yellowing | cloudiness |

[Industrial Applicability]

The silicone adhesive composition of the present invention can be cured at low temperatures, including at room temperature, and yields a colorless cured product with a high degree of transparency, and is consequently useful as a coating material or the like for glass surfaces that are prone to scratching. Moreover, the composition can also be used as a peripheral material for LED elements and liquid crystal display devices, as well as in the electrical and electronic fields, and vehicle-related fields.

## Claims

1. A room temperature addition curable silicone adhesive composition comprising:

(A) a diorganopolysiloxane containing at least two alkenyl groups bonded to silicon atoms within each molecule wherein organic groups bonded to the silicon atoms in the diorganopolysiloxane other than the alkenyl groups are unsubstituted or halogen-substituted monovalent hydrocarbon groups,
(B) a three dimensional organopolysiloxane resin that comprises at least one branch-forming unit selected from trifunctional siloxane units represented by formula $RSiO_{3/2}$ (wherein, R represents a substituted or unsubstituted monovalent hydrocarbon group) and tetrafunctional siloxane units represented by $SiO_{4/2}$,
(C) an organohydrogenpolysiloxane containing at least two hydrogen atoms bonded to silicon atoms within each molecule, represented by an average composition formula (1):

$$H_aR^3_bSiO_{(4-a-b)/2} \qquad (1)$$

wherein each $R^3$ group represents, independently, an unsubstituted monovalent hydrocarbon group that contains no aliphatic unsaturated bonds or a trifluoropropyl group, and a and b are numbers that satisfy the formulas:

$$0 < a < 2,\ 0.8 \leq b \leq 2 \text{ and } 0.8 < a+b \leq 3$$

in sufficient quantity to provide from 0.1 to 5.0 mols of hydrogen atoms bonded to silicon atoms within component (C) per 1 mol of a total quantity of silicon atom-bonded alkenyl groups within component (A) and component (B),
(D) a catalytic quantity of a hydrosilylation reaction catalyst,
(E) an organosilicon compound as an adhesion-imparting agent selected from an organosilane or organopolysiloxane that contains at least two functional groups selected from the group consisting of alkoxy groups, a silanol group, an epoxy group, alkenyl groups, an acryloyl group, a methacryloyl group and a hydrosilyl group, and
(F) an acid anhydride that is liquid at room temperature.

2. The addition curable silicone adhesive composition according to claim 1, wherein the three dimensional organopolysiloxane resin of component (B) contains one or more alkenyl groups bonded to silicon atoms within the molecule.

3. The addition curable silicone adhesive composition according to claim 1 or 2, wherein the acid anhydride of component (F) contains an aliphatic unsaturated group.

4. The addition curable silicone adhesive composition according to any one of claims 1 through 3, which is used in an application in which glass is used as an adherend.

5. A transparent cured product, which is obtained by curing the addition curable silicone adhesive composition according to any one of claims 1 through 4, and which exhibits a transmittance of at least 70% for a light within a wavelength band from 400 to 800 nm, and a type A hardness prescribed in JIS K6253 of 25 or greater.

6. An at least partially transparent product, comprising:

a glass portion and an adhesive portion;
wherein the adhesive portion comprises the room temperature addition curable silicone adhesive composition according to any of claims 1 to 3, which is in direct contact with the glass portion and is in cured form.

7. A process for producing a transparent cured product of a silicone composition, comprising curing the composition according to any one of claims 1 to 3 at room temperature.

8. A process for producing a transparent product comprising a glass portion and an adhesive portion which is in direct contact with the glass portion, comprising:

applying the composition according to any one of claims 1 to 3 to a substrate of glass, and
curing the thus obtained composition to form the adhesive portion comprising a cured product of the composition.

**Patentansprüche**

1. Bei Raumtemperatur additionshärtbare Silikonklebstoffzusammensetzung, umfassend:

(A) ein Diorganopolysiloxan mit mindestens zwei an Siliciumatome gebundenen Alkenylgruppen in jedem Molekül, wobei es sich bei von den Alkenylgruppen verschiedenen organischen Gruppen, die an die Siliciumatome in dem Diorganopolysiloxan gebunden sind, um unsubstituierte oder halogensubstituierte einwertige Kohlenwasserstoffgruppen handelt,
(B) ein dreidimensionales Organopolysiloxanharz mit mindestens einer verzweigungsbildenden Einheit, die unter trifunktionellen Siloxaneinheiten der Formel $RSiO_{3/2}$ (worin R für eine substituierte oder unsubstituierte einwertige Kohlenwasserstoffgruppe steht) und tetrafunktionellen Siloxaneinheiten der Formel $SiO_{4/2}$ ausgewählt ist,
(C) ein Organohydrogenpolysiloxan mit mindestens zwei an Siliciumatome gebundenen Wasserstoffatomen in jedem Molekül, das durch die durchschnittliche Zusammensetzungsformel (1) wiedergegeben wird:

$$H_aR^3_bSiO_{(4-a-b)/2} \qquad (1)$$

worin jede Gruppe $R^3$ unabhängig für eine unsubstituierte einwertige Kohlenwasserstoffgruppe ohne aliphatische ungesättigte Bindungen oder eine Trifluorpropylgruppe steht und a und b für Zahlen stehen, die die Formeln:

$$0 < a < 2,\ 0{,}8 \leq b \leq 2 \text{ und } 0{,}8 < a+b \leq 3$$

erfüllen, in einer zur Bereitstellung von 0,1 bis 5,0 mol an Siliciumatomen gebundenen Wasserstoffatomen in Komponente (C) pro 1 mol der Gesamtmenge siliciumatomgebundener Alkenylgruppen in Komponente (A) und Komponente (B) ausreichenden Menge,
(D) eine katalytisch wirksame Menge eines Hydrosilylierungsreaktionskatalysators,
(E) eine Organosiliciumverbindung als haftungsverleihendes Mittel, ausgewählt unter einem Organosilan oder Organopolysiloxan mit mindestens zwei funktionellen Gruppen aus der Gruppe bestehend aus Alkoxygruppen, einer Silanolgruppe, einer Epoxidgruppe, Alkenylgruppen, einer Acryloylgruppe, einer Methacryloylgruppe und einer Hydrosilylgruppe, und
(F) ein Säureanhydrid, das bei Raumtemperatur flüssig ist.

2. Additionshärtbare Silikonklebstoffzusammensetzung nach Anspruch 1, wobei das dreidimensionale Organopolysiloxanharz von Komponente (B) eine oder mehrere an Siliciumatome gebundene Alkenylgruppen im Molekül enthält.

3. Additionshärtbare Silikonklebstoffzusammensetzung nach Anspruch 1 oder 2, wobei das Säureanhydrid von Komponente (F) eine aliphatische ungesättigte Gruppe enthält.

4. Additionshärtbare Silikonklebstoffzusammensetzung nach einem der Ansprüche 1 bis 3, die bei einer Anwendung verwendet wird, bei der Glas als Klebesubstrat verwendet wird.

5. Transparentes gehärtetes Produkt, das durch Härten der additionshärtbaren Silikonklebstoffzusammensetzung nach einem der Ansprüche 1 bis 4 erhalten wird und das eine Durchlässigkeit für Licht innerhalb eines Wellenlängenbands von 400 nm bis 800 nm von mindestens 70% und eine Typ-A-Härte gemäß JIS K6253 von 25 oder mehr aufweist.

6. Zumindest teilweise transparentes Produkt, umfassend:

einen Glasteil und einen Klebstoffteil;
wobei der Klebstoffteil die bei Raumtemperatur additionshärtbare Silikonklebstoffzusammensetzung nach einem der Ansprüche 1 bis 3, die sich in direktem Kontakt mit dem Glasteil befindet und in gehärteter Form vorliegt, umfasst.

7. Verfahren zur Herstellung eines transparenten gehärteten Produkts einer Silikonzusammensetzung, bei dem man die Zusammensetzung nach einem der Ansprüche 1 bis 3 bei Raumtemperatur härtet.

**8.** Verfahren zur Herstellung eines transparenten Produkts, umfassend einen Glasteil und einen Klebstoffteil, der sich in direktem Kontakt mit dem Glasteil befindet, bei dem man:

die Zusammensetzung nach einem der Ansprüche 1 bis 3 auf ein Glassubstrat aufbringt und
die so erhaltene Zusammensetzung zur Bildung des Klebstoffteils, der ein gehärtetes Produkt der Zusammensetzung umfasst, härtet.

**Revendications**

**1.** Composition d'addition adhésive en silicone durcissable à la température ambiante, comprenant :

(A) un diorganopolysiloxane contenant au moins deux groupes alcényle liés à des atomes de silicium dans chaque molécule, les groupes organiques liés aux atomes de silicium dans le diorganopolysiloxane autres que les groupes alcényle étant des groupes hydrocarbonés monovalents non substitués ou substitués par des atomes d'halogène,
(B) une résine d'organopolysiloxane tridimensionnelle qui comprend au moins une unité de ramification sélectionnée parmi des unités siloxane trifonctionnelles représentées par la formule $RSiO_{3/2}$ (dans laquelle R représente un groupe hydrocarboné monovalent substitué ou non substitué) et des unités siloxane tétrafonctionnelles représentées par la formule $SiO_{4/2}$,
(C) un organohydrogénopolysiloxane contenant au moins deux atomes d'hydrogène liés à des atomes de silicium dans chaque molécule, représenté par une formule de composition moyenne (1) :

$$H_aR^3_bSiO_{(4-a-b)/2} \qquad (1)$$

dans laquelle chaque groupe $R^3$ représente, indépendamment, un groupe hydrocarboné monovalent non substitué qui ne contient pas de liaisons insaturées aliphatiques ou un groupe trifluoropropyle, et a et b sont des nombres qui satisfont aux formules :

$$0 < a < 2,\ 0,8 \leq b \leq 2 \text{ et } 0,8 < a+b \leq 3$$

en quantité suffisante pour produire de 0,1 à 5,0 mols d'atomes d'hydrogène liés à des atomes de silicium dans le composant (C) par mol d'une quantité totale de groupes alcényle liés à des atomes de silicium dans le composant (A) et le composant (B),
(D) une quantité catalytique d'un catalyseur de réaction d'hydrosilation,
(E) un composé d'organosilicium comme agent d'adhérence sélectionné parmi un organosilane ou un organopolysiloxane qui contient au moins deux groupes fonctionnels sélectionnés dans le groupe constitué de groupes alcoxy, d'un groupe silanol, d'un groupe époxy, de groupes alcényle, d'un groupe acryloyle, d'un groupe méthacryloyle et d'un groupe hydrosilyle, et
(F) un anhydride d'acide qui est liquide à la température ambiante.

**2.** Composition d'addition adhésive en silicone durcissable selon la revendication 1, dans laquelle la résine d'organopolysiloxane tridimensionnelle du composant (B) contient un ou plusieurs groupes alcényle liés à des atomes de silicium dans la molécule.

**3.** Composition d'addition adhésive en silicone durcissable selon la revendication 1 ou 2, dans laquelle l'anhydride d'acide du composant (F) contient un groupe à insaturation aliphatique.

**4.** Composition d'addition adhésive en silicone durcissable selon l'une quelconque des revendications 1 à 3, laquelle est utilisée dans une application dans laquelle du verre est employé comme support.

**5.** Produit durci transparent, lequel est obtenu par durcissement de la composition d'addition adhésive en silicone durcissable selon l'une quelconque des revendications 1 à 4, et lequel présente un facteur de transmission d'au moins 70 % pour une lumière dans une plage de longueurs d'onde de 400 à 800 nm, et une dureté de type A selon JIS K6253 de 25 ou plus.

**6.** Produit au moins partiellement transparent, comprenant :

une partie en verre et une partie adhésive ;
dans lequel la partie adhésive comprend la composition d'addition adhésive en silicone durcissable à la température ambiante selon l'une quelconque des revendications 1 à 3, laquelle est directement en contact avec la partie en verre et est sous forme durcie.

**7.** Procédé de fabrication d'un produit durci transparent d'une composition en silicone, comprenant le durcissement de la composition selon l'une quelconque des revendications 1 à 3 à la température ambiante.

**8.** Procédé de fabrication d'un produit transparent comprenant une partie en verre et une partie adhésive qui est directement en contact avec la partie en verre, comprenant :

l'application de la composition selon l'une quelconque des revendications 1 à 3 sur un substrat en verre, et
le durcissement de la composition ainsi obtenue pour former la partie adhésive comprenant un produit durci de la composition.

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- EP 1172413 A2
- EP 1136532 A2
- US 20060047133 A1
- US 3220972 A
- US 3159601 A
- US 3159662 A
- US 3775452 A